Europäisches Patentamt

European Patent Office

Office européen des brevets

(11) Publication number: **0 100 773**

**B1**

## (12) EUROPEAN PATENT SPECIFICATION

(45) Date of publication of patent specification: **17.12.86**

(51) Int. Cl.[4]: **G 10 L 7/00**

(21) Application number: **82107139.6**

(22) Date of filing: **06.08.82**

(54) Speech recognition system for an automotive vehicle.

(43) Date of publication of application: .
**22.02.84 Bulletin 84/08**

(45) Publication of the grant of the patent:
**17.12.86 Bulletin 86/51**

(84) Designated Contracting States:
**DE FR GB**

(56) References cited:
**EP-A-0 054 365**
**GB-A- 916 781**
**US-A-4 061 874**

**PROCEEDINGS OF THE IEEE, vol. 64, no. 4,**
**April 1976, pages 501-531, New York, USA D.R.**
**REDDY: "Speech recognition by machine: a**
**review"**

**IBM TECHNICAL DISCLOSURE BULLETIN, vol.**
**22, no. 11, April 1980, New York, USA S.L.**
**DUNIK: "Phoneme recognizer using formant**
**ratios"**

**ICASSP-79, 1979 IEEE international conference**
**on acoustics, speech & signal processing,**
**2nd-4th April 1979, IEEE, New York, USA M.R.**
**SAMBUR: "A preprocessing filter for enhancing**
**LPC analysis/synthesis of noisy speech"**

(73) Proprietor: **NISSAN MOTOR CO., LTD.**
**No.2, Takara-cho, Kanagawa-ku**
**Yokohama-shi Kanagawa-ken 221 (JP)**

(72) Inventor: **Noso, Kazunori**
**68, Oppamahigashi-cho, 3-chome**
**Yokosuka-shi Kanagawa-ken (JP)**
Inventor: **Kishi, Norimasa**
**150-4, Hitorizawa-cho Isogo-ku**
**Yokohama-shi Kanagawa-ken (JP)**

(74) Representative: **Patentanwälte TER MEER -**
**MÜLLER - STEINMEISTER**
**Mauerkircherstrasse 45**
**D-8000 München 80 (DE)**

(56) References cited:
**IEEE TRANSACTIONS ON AUDIO AND**
**ELECTROACOUSTICS, vol. AU-21, no. 6,**
**December 1973, pages 526-535, New York,**
**USA R.J. NIEDERJOHN et al.: "Computer**
**recognition of the continuant phonemes in**
**connected english speech"**

## Description

The present invention relates generally to a speech recognition system for an automotive vehicle, and more particularly to a speech recognition system provided with means for effectively eliminating noise generated by engines from a spoken phrase signal inputted through a microphone.

There is a well-known speech recognizer which can activate various actuators in response to human spoken instructions. When this speech recognizer is mounted on a vehicle, the headlight, for instance, can be turned on or off in response to spoken instructions such as "Headlight on" or "Headlight off". Such a speech recognizer usually can recognize various spoken instructions in order to control various actuators; however, there are some problems involved in applying this system to an automotive vehicle.

A speech recognizer is usually used in a relatively quiet environment; however, the speech recognition system for an automotive vehicle is usually used in a relatively noisy environment, especially while an engine is running. The speech recognition rate (the percentage of correct recognition of spoken phrase instruction) of the conventional speech recognizer is high in the case where background noise level is low, but low in the case where background noise level is high.

Therefore, when noise generated by an engine exceeds a predetermined level within the passenger compartment, the conventional speech recognizer may not activate the actuator corresponding to a spoken instruction inputted thereto or may activate a different actuator, resulting in an undesirable or even dangerous situation.

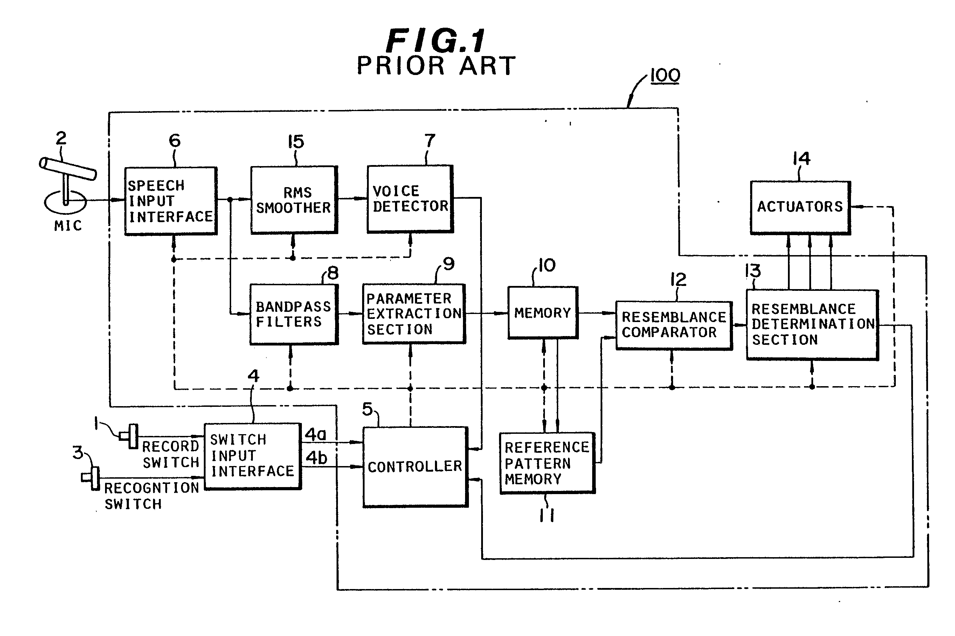

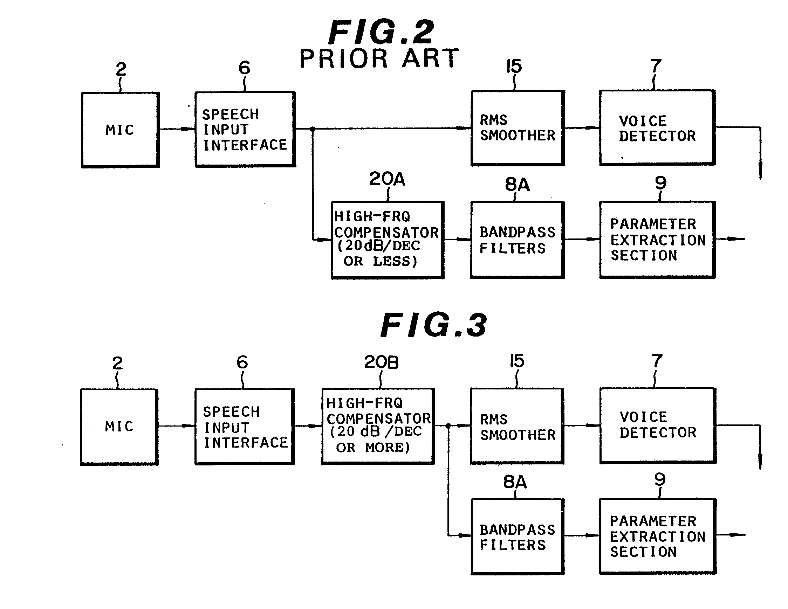

A more detailed description of a typical speech recognizer will be made below with reference to Figs. 1 and 2 of the attached drawings.

With these problems in mind therefore, it is the primary object of the present invention to provide a speech recognition system for an automotive vehicle which can effectively eliminate noise, in particular that generated by vehicle engines, from the electrical signals representing spoken instructions inputted thereto through a microphone.

To achieve the above-mentioned object, the speech recognition system for an automotive vehicle according to the pre-characterizing part of claim 1 comprises a notch filter means connected between sound input means and bandpass filter means for attenuating frequency components of the signals received through the microphone at approximately 400 Hz.

Furthermore, when the bandpass filters are so designed at to pass only the formant frequency ranges (explained later) of speech sounds (500 to 600, 900 to 2200 Hz), it is possible to more effectively eliminate noise generated by vehicle engines from the electrical signal representing spoken instructions inputted to the system through a microphone.

The features and advantage of the speech recognition system for an automotive vehicle according to the present invention over the prior-art speech recognizer will be more clearly appreciated from the following description of the preferred embodiments of the invention taken in conjuction with the accompanying drawings in which like reference numerals designate the same or similar elements or sections throughout the figures thereof and in which;

Fig. 1 is a schematic block diagram of a typical prior-art speech recognizer for assistance in explaining the operations thereof;

Fig. 2 is a schematic block diagram of an essential portion of the typical prior-art speech recognizer including a high-frequency compensator having a gradient of 20 dB/decade or less;

Fig. 3 is a schematic block diagram of an essential portion of a first embodiment of the speech recognition system for an automotive vehicle according to the present invention, which includes a high-frequency compensator having a gradient of 20 dB/decade or more;

Fig. 4 is a graphical representation of the frequency characteristics of noise within a passenger compartment of an automotive vehicle;

Fig. 5 is a graphical approximation of the frequency characteristics of Fig. 4;

Fig. 6 is a graphical representation of the frequency characteristics of the high-frequency compensator for use in the speech recognition system of an automotive vehicle according to the present invention;

Fig. 7 is a graphical representation showing the cancellation of noise signals by the high-frequeny compensator used in the speech recognition system for an automotive vehicle according to the present invention;

Fig. 8 is a graphical representation of the other frequency characteristics of the high-frequency compensator used in the speech recognition system for an automotive vehicle according to the present invention;

Fig. 9 is a schematic block diagram of an essential portion of a second embodiment of the speech recognition system for an automotive vehicle according to the present invention, which employs notch filters;

Fig. 10 is a graphical representation of the frequency characteristics of the notch filters shown in Fig. 9;

Fig. 11 ia a schematic block diagram of an essential portion of a third embodiment of the speech recognition system for an automotive vehicle according to the present invention, which employs the high-frequency compensator having a gradient of 20 dB or more and three bandpass filters;

Fig. 12 is a graphical representation of the frequency characteristics of the three bandpass filters shown in Fig. 11; and

# 0 100 773

Fig. 13 is a schematic block diagram of a fourth embodiment of the speech recognition system using a microcomputer for an automotive vehicle according to the present invention, which employs a high-frequency compensator having a gradient of 20 dB/decade or more, notch filters for attenuating the major vehicle engine noise frequency components and a group of bandpass filters the lowest central pass band frequency of which is more than 500 Hz.

Detailed description of the preferred embodiments

To facilitate understanding of the present invention, a brief reference will be made to the principle or opertion of a typical prior-art speech recognizer, with reference to Figures 1 and 2.

Fig. 1 is a schematic block diagram of a typical speech recognizer 100. To use the speech recognizer, the user must first record a plurality of predetermined spoken instructions. Specifically, in this spoken instruction recording mode (reference mode), the user first depresses a record switch 1 disposed near the user. When the record switch 1 is depressed, a switch input interface 4 detects the depression of the record switch 1 and outputs a signal to a controller 5 via a wire 4a. In response to this signal, the controller 5 outputs a recording mode command signal to other sections in order to preset the entire speech recognizer to the recording mode. In the spoken instruction recording mode, when the user says a phrase to be used as a spoken instruction, such as "open doors", near a microphone 2, the spoken phrase is transduced into a corresponding electrical signal through the microphone 2, amplified through a speech input interface 6, smoothed through a root-mean-square (RMS) smoother 15, and finally inputted to a voice detector 7. This voice detector 7 detects whether or not the magnitude of the spoken phrase signal exceeds a predetermined level for a predetermined period of time (150 to 250 ms) in order to determine the start of the spoken phrase input signal and whether or not the magnitude of the signal drops below a predetermined level for a predetermined period of time in order to determine the end of the signal. Upon detection of the start of the signal, this voice detector 7 outputs another recording mode command signal to the controller 5. In response to this command signal, the controller 5 activates a group of bandpass filters 8, to that the spoken phrase signal from the microphone 2 is divided into a number of predetermined frequency bands. Given to a parameter extraction section 9, the frequency-divided spoken phrase signals are squared or rectified therein in order to obtain the voice power spectrum for each of the frequency bands and then converted into a time-slice of digital time-series matrix-phonetic pattern data (explained later). These data are next stored in a memory unit 10. In this case, however, since the speech recognizer is set to the spoken instruction recording mode by the depression of the record switch 1, the time-series matrix-phonetic pattern data are transferred to a reference pattern memory unit 11 and stored therein as reference data for use in recognizing the speech instructions.

After having recorded the reference spoken instructions, the user can input speech instructions, such as "open doors", to the speech recognizer through the microphone 2 while depessing a recognition switch 3.

When this recognition switch 3 is depressed, the switch input interface 4 detects the depression of the recognition switch 3 and outputs a signal to the controller 5 via a wire 4b. In response to this signal, the controller 5 outputs a recognition mode command signal to other sections in order to preset the entire speech recognizer to the recognition mode. In this spoken phrase recognition mode, wgen the user says an instruction phrase similar to the one recorded previously near the microphone 2 and when the voice detector 7 outputs a start signal, the spoken instruction is transduced into a corresponding electric signal through the microphone 2, amplified through the speech input interface 6, filtered and divided into voice power spectra through the band pass filters 8, squared or rectified and further converted into corresponding digital time-series matrix-phonetic pattern data through the parameter extraction section 9, and then stored in the memory unit 10, in the same manner as in the recording mode.

Next, the time-series matrix-phonetic pattern data stored in the memory unit 10 in the recognition mode are sequentially compared with the time-series matrix-phonetic pattern data stored in the reference pattern memory unit 11 in the recording mode by a resemblance comparator 12. The resemblance comparator 12 calculates the correlation factor of the inputted speech instruction to the reference speech instruction after time normalization and level normalization for compensating for variable speaking rate (because a person may speak quickly and loudly at one time but slowly and at a whisper at some other time). The correlation factor is usually obtained by calculating Tchebycheff distance (explained later) between recognition-mode time-series matrix-phonetic pattern data and recording-mode time-series matrix-phonetic pattern data. The correlation factor calculated by the resemblance comparator 12 is next given to a resemblance determination section 13 to determine whether or not the calulated values lie within a predetermined range, that is, to evaluate their cross-correlation. If within the range, a command signal, indicating that the recognition-mode spoken instruction has an adequate resemblance to one of the recorded instruction phrases, is outputted to one of actuators 14, for instance, in order to open the vehicle doors. The above-mentioned operations are all executed in accordance with command signals outputted from the controller 5.

This speech recognizer 100 can be seen to be made up functionally of an input section (microphone 2, interface 6), a voice detection section (smoother 15, detector 7), and a voice analysis section (all other components). The invention concerns the input section predominantly.

Description has been made hereinabove of the case where the speech recognizer 100 comprises

3

various discrete elements or sections; however, it is of course possible to embody the speech recognizer 100 with a microcomputer including a central processing unit, a read-only memory, a random-access memory, a clock oscillator, etc. In this case, the voice detector 7, the parameter extraction section 9, the memory 10, the reference pattern memory 11, the resemblance comparator 12 and the resemblance determination section 13 can all be incorporated within the microcomputer, executing the same or similar processing, calculation or operations as explained hereinabove.

Additionally, the digital time-series matrix-phonetic pattern data and the Tchebycheff distance are defined as follows:

In the case where the number of the bandpass filters is four and the number of time-slices for each is 32, the digital recording-mode time-series matrix-phonetic pattern data can be expressed as

$$F(A) = f(i,f) = \begin{matrix} f(1,1), f(1,2), f(1,3) \ldots, f(1,32) \\ f(2,1), f(2,2), f(2,3) \ldots, f(2,32) \\ f(3,1), f(3,2), f(3,3) \ldots, f(3,32) \\ f(4,1), f(4,2), f(4,3) \ldots, f(4,32) \end{matrix}$$

where A designates a first recording-mode speech instruction (reference) (e.g. OPEN DOORS), i denotes the filter index, and j denotes time-series data index.

Here, if a first recognition-mode speech instruction (e.g. OPEN DOORS) is designated by B, the Tchebycheff distance can be obtained from the following expression:

$$I = | F(A) - F(B) | = \sum_{i=1}^{4} \sum_{j=1}^{32} | f^A(i,f) - f^B(i,j) |$$

In addition, the typical prior-art speech recognizer 100 usually includes a high-frequency compensator 20A between the speech input interface 6 and the bandpass filters 8A, as shown in Fig. 2, in order to enhance the higher frequency range of speech sounds. The reason is as follows: since speech sounds tend to be attenuated at the higher frequencies, when the speech sounds are amplified at a constant amplification degree throughout the entire frequency range thereof, the resolution of the sound volume level in the higher frequency band will be much poorer than the lower frequencies. Therefore, frequency-gain characteristics with a gradient of 20dB/decade or less are commonly effected in the high-frequency compensator 20A in the prior-art speech recognizer, where "decade" means a multiplicative factor of 10 or decimal order of magnitude of increase in frequency.

This gradient value is sufficient in usual, quiet environments, but insufficient in noisy environments. In particular, in a speech recognition system for an automotive vehicle, a gradient of 20 dB/decade or less is not sufficient, because noise generated by vehicle engines is additionally superposed upon the background noise. In this case, noise includes components generated by the engine mounted on the user's own vehicle and other engines mounted on other vehicles in the vicinity of the user's vehicle, the major components of which cluster around frequencies of 200, 400 and 800 Hz.

In view of the above description and with reference to the attached drawings, the embodiments of the speech recognition system for an automotive vehicle according to the present invention will be described hereinbelow.

Fig. 3 is as schematic block diagram of an essential portion of a first embodiment of the speech recognition system according to the present invention.

In the figure, the reference numeral 20B denotes a high-frequency compensator provided with gainfrequency characteristics having a gradient of 20 dB/decade or more, which can compensate for the low-frequency components of noise generated from vehicle engines. This high-frequency compensator 20B is usually made up of a plurality of differentiating circuits.

The reason why a gradient of 20 dB/decade or more is necessary will be described in more detail with reference to the attached graphical representations.

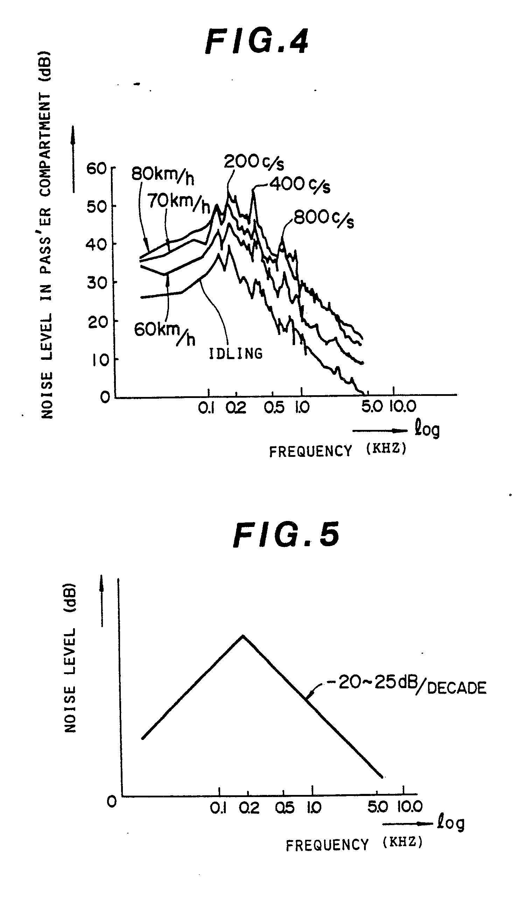

Fig. 4 shows the frequency characteristics of noise within a passenger compartment of an automotive vehicle as measured at four different vehicle speeds — idling, 60, 70 and 80 Km/h. This graphical representation clearly indicates that there are three peaks near frequencies of 200, 400 and 800 Hz.

Fig. 5 shows the frequency characteristics of Fig. 4 approximated by a pair of line segments. This graphical representation indicates that the characteristics have a gradient of about minus 20 to 25 dB/decade in the frequency range greater than approximately 200 Hz.

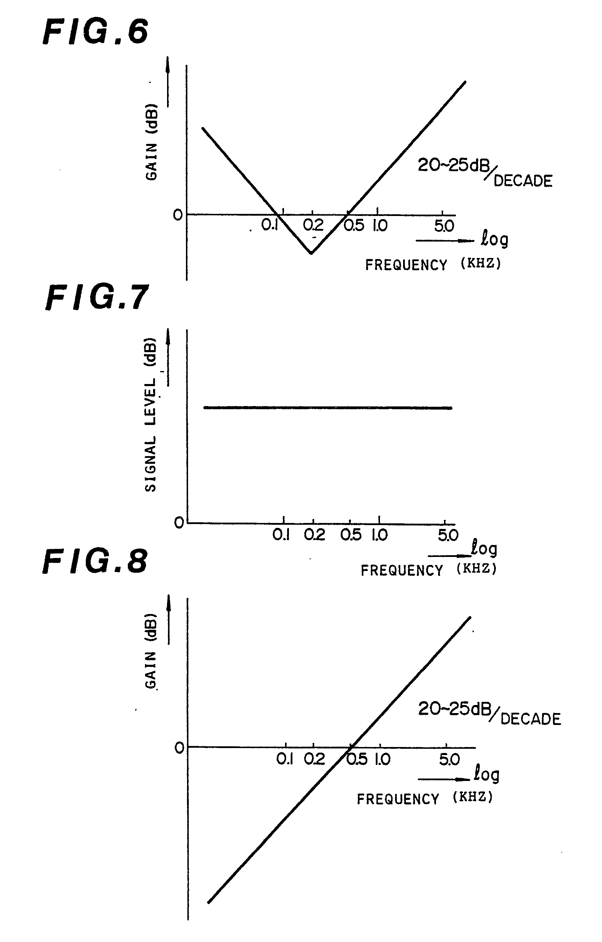

Fig. 6 shows the frequency characteristic of the high-frequency compensator 20B according to the present invention, which is the reverse of that in Fig. 5. Accordingly, the high-frequency compensator 20B can cancel the effect of the vehicle engine noise within a passenger compartment, as shown in Fig. 7.

The operation of this embodiment will be described hereinbelow.

A spoken phrase instruction including both speech sounds and engine noise is inputted into the

4

microphone 2, transduced into the corresponding electric signal, amplified by the speech input interface 6, and inputted to the high frequency compensator 20B. Since vehicle engine noise approximates the frequency characteristics shown in Fig. 5 and the compensator 20A has those shown in Fig. 6, these opposing characteristics result in the flat frequency/amplitude trace of a spoken instruction signal excluding vehicle engine noise shown in Fig. 7. The spoken instruction signal thus obtained is next given to the voice detector 7 via the root-mean-square smoother 15. Since there is a predetermined threshold level in the voice detector 7, when the spoken phrase instruction signal exceeds the threshold level for a predetermined period of time, a signal is outputted to indicate the start of speech instruction signals. Therefore, when the threshold value is preset to be a little higher than the signal level shown in Fig. 7, it is possible for the voice detector 7 to accurately detect the start and end points of a speech instruction while eliminating the misleading noise generated by vehicle engines. In addition, the spoken instruction signal from the high-frequency compensator 20B is applied to the bandpass filters 8 etc. in order to obtain time-series matrix-phonetic pattern data. Furthermore, in this embodiment, since the component of sound pitch included in vowels (the fundamental frequency of which is about 100 Hz) experiences minimal attenuation by the high-frequency compensator 20B, it is possible to reliably detect the sounds of speech.

Fig. 8 shows alternative frequency characteristics for the high-frequency compensator 20B according to the present invention, which exhibits linear characteristics throughout its frequency range so that background noise and compensator gain have opposite characteristics at frequencies greater than 200 Hz but the same characteristics at frequencies less than 200 Hz. The reason why such characteristics can be adopted is as follows: formant frequencies (characteristic components of the sounds of speech or the resonance bands regarded as determining the phonetic quality of a vowel) of speech include a first group or 300 to 500 Hz and a high-order group of more than 1 KHz; therefore, if only the components of these formant frequencies can be given to the voice detector 7 of the parameter extraction section 9, it is possible to accurately recognize spoken instructions. Even if the frequency components of less than 200 Hz are disregarded, there exists no practical disadvantage. Therefore, in the above-mentioned two methods, speech sounds are enhanced at the expense of vehicle engine noise by amplifying only the formant frequencies greater than 200 Hz in order to accurately detect spoken instructions.

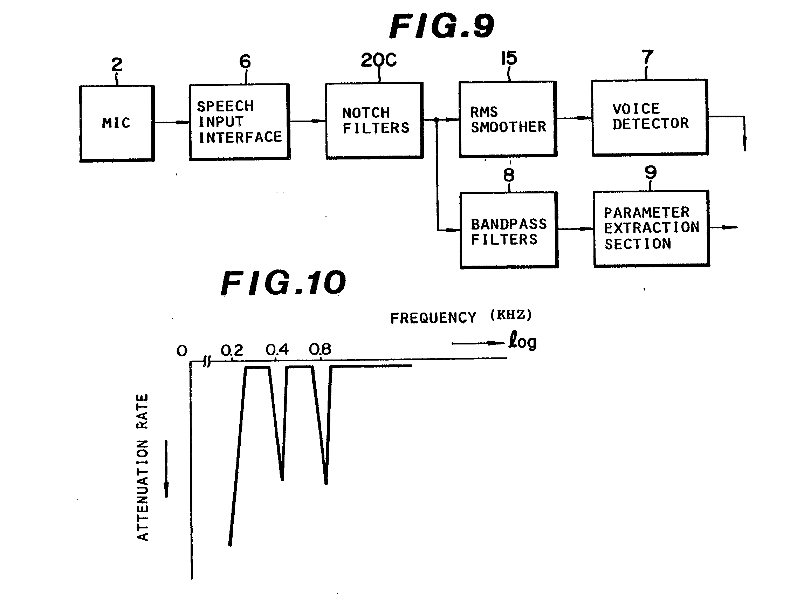

Fig. 9 shows a second embodiment of the speech recognition system for an automotive vehicle according to the present invention, which includes notch filters in place of the high-frequency compensator 20B. Although the second embodiment described hereinbelow includes only the notch filters, it is of course possible to use the notch filters in addition to the high-frequency compensator 20B in order to more effectively eliminate the frequency components of noise generated by engines.

As already explained, since the nouse generated by an engine consists largely of frequency components at 200, 400 and 800 Hz, it is possible to effectively eliminate vehicle engine noise from the spoken instruction signal by attenuating these frequencies. Notch filters have relatively sharp attenuation characteristics as compared with ordinary bandpass filters; therefore, the vehicle engine noise can be eliminated without attenuating the first spoken sound formant frequency from 300 to 500 Hz and the high-order spoken sound formant frequency of more than 1 KHz.

Fig. 10 shows exemplary frequency characteristics of these notch filters 20C. Alternately, in this embodiment, it would also be effective to use just one notch filter to eliminate the loudest peak at 400 Hz.

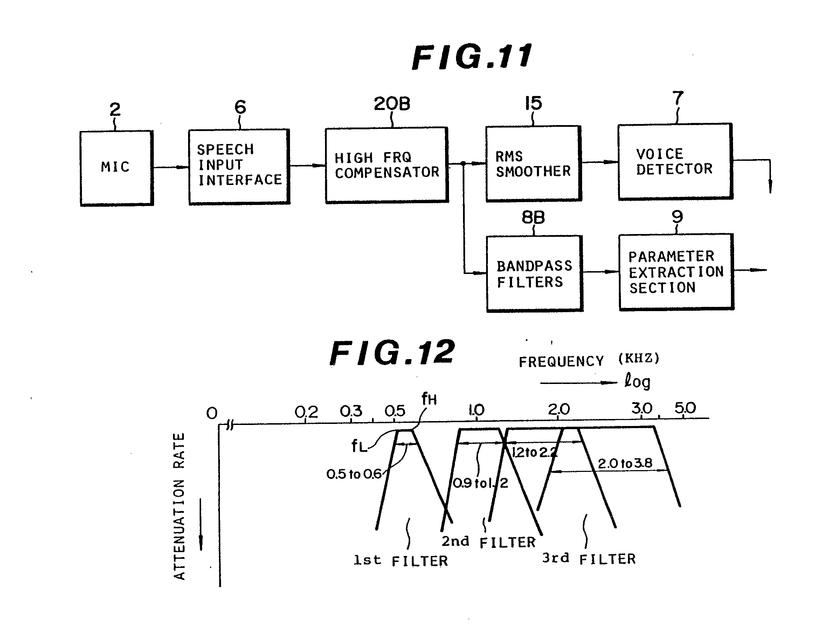

Fig. 11 shows a third embodiment of the speech recognition system for an automotive vehicle according to the present invention, which includes bandpass filters which can pass only the speech formant frequencies of 500 to 600 Hz ± 10 percent, 900 to 1200 Hz ± 10 percent and 1200 to 2200 Hz ± 10 percent.

Fig. 12 shows exemplary frequency characteristics of these bandpass filtes 8B.

In this embodiment, as shown in Fig. 12, the frequency components lower than 500 Hz are completely attenuated. Since the frequency components of 200 Hz and 400 Hz are very strong in vehicle engine noise power as depicted in Fig. 4, even if only the components lower than 500 Hz are attenuated, almost all vehicle noise frequency components can be eliminated. However, in this case, since the first spoken sound formant component of 300 Hz is also necessarily attenuated, there arises a different problem in that it may not be possible to sufficiently extract the fundamental components of vowel sounds. However, various experiments have indicated that if the pass bands of the bandpass filters are predetermined to be more than 500 Hz as described above, it is possible to sufficiently extract vowel sounds.

Furthermore, in order to extract the frequency components of silent consonant sounds, it is preferable to additionally provide a bandpass filter having a pass band of about 2000 to 3800 Hz.

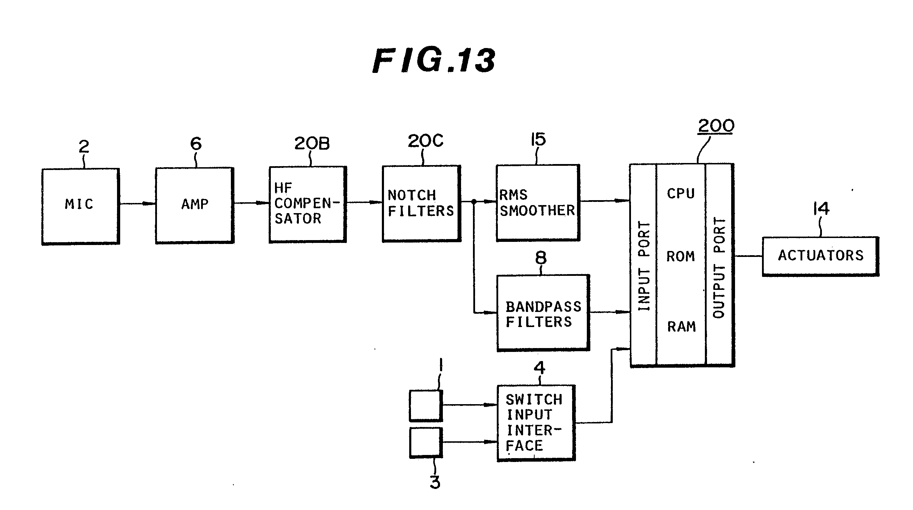

Fig. 13 shows a fourth embodiment of the speech recognition system using a microcomputer which performs the functions of all of the noise-eliminating means, including a high-frequency compensator having a gain/frequency gradient of 20 dB/decade or more, notch filters for attenuating the major vehicle engine noise frequency components at 200, 400, and 800 Hz, and a group of bandpass filters the lowest central pass band frequency of which is more than 500 Hz.

In the figure, a microcomputer 200 including a central processing unit, a read-only memory, a random-access memory, etc. performs various processing, calculations, comparisons and operations similar to those performed by the voice detector 7, the parameter extraction section 9, the memory unit 10, the reference pattern memory unit 11, the resemblance comparator 12, the resemblance determination section 13, and the controller 5, which have already been explained hereinabove. Additionally in Fig. 13, the reference numeral 6 denotes an amplifier; however, this amplifier is usually included in the speech input interface 6 of Fig. 1. Furthermore, the root-mean-square smoother 15 is shown in Fig. 13 as a discrete unit; however, it is possible to perform the same function by using the microcomputer 200.

The fourth embodiment includes three noise eliminating means (the compensator, notch filters and bandpass filters) all as described hereinabove; however, the notch filters are not necessarily required because the functions of the notch filters are almost the same as those of the bandpass filters according to the present invention.

As described above, in the speech recognition system for an automotive vehicle according to the present invention, since there is provided a group of bandpass filters the lowest central pass band frequency of which is more than 500 Hz or notch filters for attenuating the major vehicle noise frequency components at 200, 400 and 800 Hz, in addition to a high-frequency compensator having a gradient of 20 to 25 dB/decade or more, it is possible to effectively separate vehicle engine noise from speech instruction signals or extract speech instruction signals from vehicle engine noise. In other words, in the speech recognition system for an automotive vehicle according to the present invention, the speech instructions can be reliably recognized within the noisy passenger compartment and thus the speech instruction recognition rate can be improved markedly.

**Claims**

1. A speech recognition system for an automotive vehicle for activating vehicle actuators in response to spoken instructions received through a microphone, which includes:

a sound input means (6) for receiving signals from the microphone;

a voice detection means (15, 7) connected to said sound input means for detecting the beginning and the end of spoken instructions and outputting instruction start and instruction end signals, respectively, in response to detection thereof;

bandpass filter means (8, 8A) connected to said sound input means for filtering signals from said sound input means; and

a voice analysing means (8 to 14; 20 A,B,C) connected to said sound input means and responsive to the instruction start and instruction end signals to analyze the signals filtered from said input means (6), to compare the results of analysis with predetermined reference values corresponding to at least one spoken instruction, and for activating at least one actuator when the results of analysis match predetermined reference values associated with the actuator.

characterized by notch filter means (20C) connected between said sound input means (6) and said bandpass filter means (8) for attenuating frequency components of the signals received through the microphone (2) at approximately 400 Hz.

2. The speech recognition system as set forth in claim 1, characterized in that said notch filter means (20C) further attenuates the frequency components of the signals received through the microphone at approximately 200 Hz and at approximately 800 Hz.

3. The speech recognition system as set forth in claim 1, characterized in that the lowest central passband frequency of said bandpass filter means (8) is more than 500 Hz.

4. The speech recognition system as set forth in claim 1, characterized in that in passband frequencies of said bandpass filter means (8) range in 500 to 600 Hz and from 900 to 2200 Hz.

5. The speech recognition system as set forth in claim 1, characterised in that passband frequencies of said bandpass filter means (8) range from 500 to 600 Hz and 900 to 3800 Hz.

6. The speech recognition system as set forth in claim 1, characterized in that said sound input means (6) further comprises compensating means (20B) for compensating for variable frequency characteristic noise signals present in the signals from the microphone, said compensating means including filter means comprised of first means having a frequency response of a high frequency characteristic substantially inverse to a high frequency characteristic of the noise signals for cancelling the noise signals and for providing a substantially flat response at the high frequency to the noise signals.

7. The speech recognition system as set forth in claim 6, characterized in that said filter means includes second filter means having a frequency response of a predetermined low frequency characteristic substantially inverse to a low frequency characteristic of the noise signals for cancelling the noise signals and for providing a substantially flat response at the high frequencies and the low frequencies to the noise signals.

8. The speech recognition system as set forth in claim 6, characterized in that said filter means has a negative slope low frequency response and a positive slope high frequency response for providing a substantially flat response to the noise signal at both high and low frequencies.

9. The speech recognition system as set forth in claim 8, characterized in that the negative slope low frequency response is approximately −20 dB or less per decade in frequency lower than approximately 200 Hz and the positive slope high frequency response is approximately 200 dB or more per decade in frequency higher than approximately 200 Hz.

6

**Patentansprüche**

1. Spracherkennungseinrichtung für ein Kraftfahrzeug zur Aktivierung eines Kraftfahrzeugstellgliedes in Abhängigkeit eines in ein Mikrofon gesprochenen Befehls, mit

einer Schalleingangsschnittstelle (6) zur Aufnahme der Signale vom Mikrofon (2),

einem mit der Schalleingangsschnittstelle (6) verbundenen Sprachdetektor (15, 7) zur Erfassung des Anfangs und des Endes eines gesprochenen Befehls sowie zur Ausgabe eines Befehlsstartsignals und eines Befehlsendsignals jeweils in Abhängigkeit des Anfangs bzw. Endes des gesprochenen Befehls,

einem mit der Schalleingangsschnittstelle (6) verbundenen Bandpaß (8, 8A) zur Filterung der Signale von der Schalleingangsschnittstelle (6), und mit

einer mit der Schalleingangsschnittstelle (6) verbundenen Sprachanalyseeinrichtung (8 bis 14; 20A, B, C), die auf das Befehlsstartsignal und das Befehlsendsignal anspricht und die von der Schalleingangsschnittstelle (6) kommenden gefilterten Signale analysiert, die Analyseergebnisse mit vorbestimmten Referenzwerten vergleicht, die wenigstens einem gesprochenen Befehlssignal entsprechen, un die wenigstens ein Stellglied aktiviert, wenn die Analyseergebnisse mit dem vorbestimmten und dem Stellglied zugeordneten Referenzwert übereinstimmen, gekennzeichnet durch ein zwischen der Schalleingangsschnittstelle (6) und dem Bandpaß (8) angeordnetes Sperrfilter (20C) zur Dämpfung von Frequenzkomponenten der vom Mikrofon (2) empfangenen Signale im Bereich von etwa 400 Hz.

2. Spracherkennungseinrichtung nach Anspruch 1, dadurch gekennzeichnet, daß das Sperrfilter (20C) weiterhin Frequenzkomponenten der vom Mikrofon (2) empfangenen Signale im Bereich von etwa 200 Hz und etwa 800 Hz schwächt.

3. Spracherkennungseinrichtung nach Anspruch 1, dadurch gekennzeichnet, daß die niedrigste zentrale Durchlaßfrequenz des Bandpaßfilters (8) größer als 500 Hz ist.

4. Spracherkennungseinrichtung nach Anspruch 1, dadurch gekennzechnet, daß die Durchlaßfrequenzen des Bandpaßfilters (9) im Bereich von 500 bis 600 Hz und im Bereich von 900 bis 2000 Hz liegen.

5. Spracherkennungseinrichtung nach Anspruch 1, dadurch gekennzeichnet, daß die Durchlaßfrequenzen des Bandpaßfilters (8) im Bereich von 500 bis 600 Hz und im Bereich von 900 bis 3800 Hz liegen.

6. Spracherkennungseinrichtung nach Anspruch 1, dadurch gekennzeichnet, daß die Schalleingangsschnittstelle (6) weiterhin eine Kompensationseinrichtung (20B) zur Kompensation von Rauschsignalen mit veränderlicher Frequenzcharakteristik innerhalb der von Mikrofon (2) empfangenen Signale aufweist, und daß die Kompensationseinrichtung (20B) ein Filter mit einer ersten Einrichtung enthält, die zur Unterdrückung der Rauschsignale einen weitgehend flachen Frequenzgang im höheren Frequenzbereich aufweist, der im wesentlichen invers zum Frequenzgang im oberen Frequenzbereich der Rauschsignale verläuft.

7. Spracherkennungseinrichtung nach Anspruch 6, dadurch gekennzeichnet, daß das Filter eine zweite Einrichtung enthält, die einen weitgehend flachen Frequenzgang in einem bestimmten niedrigen Ferquenzbereich aufweist, der zur Unterdrückung der Rauschsignale im wesentlichen invers zu niedrigen Frequenzkomponenten der Rauschsignale verläuft.

8. Spracherkennungseinrichtung nach Anspruch 6, dadurch gekennzeichnet, daß das Filter negative Steilheit des Frequenzganges im niedrigen Frequenzbereich und positive Steilheit des Frenquenzganges im hohen Frequenzbereich zur Bildung eines im wesentlichen flachen Frequenzganges hinsichtlich der Rauschsignale sowohl bei hohen als auch bei niedrigen Frequenzen aufweist.

9. Spracherkennungseinrichtung nach Anspruch 8, dadurch gekennzeichnet, daß die negative Steilheit des Frequenzganges etwa −20 dB oder weniger pro Dekade bei Frequenzen unterhalb von etwa 200 Hz und die positive Steilheit des Frequenzganges etwa 20 dB oder mehr pro Dekade bei Frequenzen höher als etwa 200 Hz betragen.

**Revendications**

1. Dispositif de reconnaissance de la parole pour un véhicule automobile pour actionner des moyens d'actionnement du véhicule en réponse à des instructions parlées reçues par un microphone, qui comprend:

un moyen (6) d'entrée du son pour recevoir des signaux du microphone;

un moyen (15, 7) de détection de la voix relié audit moyen d'entrée du son pour détecter le début et la fin des instructions parlées et émettre des signaux de début d'instruction et de fin d'instruction respectivement en réponse à la détection;

un moyen formant filtre passe-bande (8, 8A) connecté audit moyen d'entrée du son pour filtrer les signaux dudit moyen d'entrée du son; et

un moyen d'analyse de la voix (8 à 14; 20 A, B, C) relié audit moyen d'entrée du son et répondant aux signaux de début d'instruction et de fin d'instruction pour analyser les signaux filtrés par ledit moyen d'entrée (6), pour comparer les résultats de l'analyse à des valeurs prédéterminées de référence correspondant au moins à une instruction parlée et pour actionner au moins un moyen d'actionnement lorsque les résultats de l'analyse correspondent à des valeurs prédéterminées de référence associées au moyen d'actionnement,

caractérisé par un moyen formant filtre à encoches (20C) connecté entre ledit moyen d'entrée du son (6) et ledit moyen formant filtre passe-bande (8) pour atténuer les composantes de fréquence des signaux reçus à travers le microphone (2) à environ 400 Hz.

2. Dispositif de reconnaissance de la parole tel qu'indiqué à la revendication 1, caractérisé en ce que ledit moyen formant filtre à encoches (20C) atténue de plus les composantes de fréquence des signaux reçus à travers le microphone à environ 200 Hz et à enviro n 800 Hz.

3. Dispositif de reconnaissance de la parole selon la revendication 1, caractérisé en ce que la plus basse fréquence centrale de la bande passante dudit moyen formant filtre passe-bande (8) est supérieure à 500 Hz.

4. Dispositif de reconnaissance de la parole selon la revendication 1, caractérisé en ce que les fréquences de bande passante dudit moyen formant filtre passe-bande (8) sont comprises entre 500 et 600 Hz et entre 900 et 2200 Hz.

5. Dispositif de reconnaissance de la parole selon la revendication 1, caractérisé en ce que les fréquences de la bande passante dudit moyen formant filtre passe-bande (8) sont comprises entre 500 et 600 Hz et 900 et 3800 Hz.

6. Dispositif de reconnaissance de la parole selon la revendication 1, caractérisé en ce que ledit moyen d'entrée du son (6) comprend de plus un moyen de compensation (20B) pour compenser des signaux de bruit à caractéristique de fréquence variable présents dans les signaux du microphone, ledit moyen de compensation comprenant un moyen formant filtre composé d'un premier moyen ayant une réponse en fréquence d'une caractéristique haute fréquence sensiblement inverse d'une caractéristique haute fréquence des signaux de bruit pour annuler les signaux de bruit et produire une réponse sensiblement plate à la haute fréquence aux signaux de bruit.

7. Dispositif de reconnaissance de la parole selon la revendication 6, caractérisé en ce que ledit moyen formant filtre comprend un second moyen formant filtre ayant une réponse en fréquence d'une caractéristique basse fréquence prédéterminée sensiblement inverse de la caractéristique basse fréquence des signaux de bruit pour annuler les signaux de bruit et produire une réponse sensiblement plate aux hautes fréquences et aux basses fréquences, aux signaux de bruit.

8. Dispositif de reconnaissance de la parole selon la revendication 6, caractérisé en ce que ledit moyen formant filtre a une réponse basse fréquence d'une pente négative et une réponse haute fréquence d'une pente positive pour produire une réponse sensiblement plate au signal de bruit aux hautes et basses fréquences.

9. Dispositif de reconnaissance de la parole selon la revendication 8, caractérisé en ce que la réponse basse fréquence d'une pente négative est d'environ $-20$ dB ou moins par décade aux fréquences plus faibles qu'environ 200 Hz et la réponse haute fréquence à pente positive est d'environ 20 dB ou plus par décade aux fréquences supérieures à environ 200 Hz.

**FIG.1**
PRIOR ART

## FIG.2
### PRIOR ART

```
2                    6
┌─────────┐    ┌───────────┐
│         │    │  SPEECH   │
│   MIC   │───▶│  INPUT    │───┬──────────────────────────┐
│         │    │ INTERFACE │   │                          │
└─────────┘    └───────────┘   │                          │
                               │                          │
              15               │         7                │
        ┌───────────┐    ┌───────────┐                    │
        │   RMS     │    │  VOICE    │                    │
        │ SMOOTHER  │───▶│ DETECTOR  │─────▶              │
        └───────────┘    └───────────┘                    │
              ▲                                            │
              │                                            │
        20A   │          8A              9                 │
  ┌───────────────┐ ┌───────────┐ ┌───────────┐           │
  │  HIGH-FRQ     │ │           │ │ PARAMETER │           │
  │ COMPENSATOR   │ │ BANDPASS  │ │EXTRACTION │─────▶      │
  │ (20dB/DEC     │─│  FILTERS  │─│ SECTION   │           │
  │  OR LESS)     │ │           │ │           │           │
  └───────────────┘ └───────────┘ └───────────┘           │
         ▲                                                 │
         └─────────────────────────────────────────────────┘
```

## FIG.3

```
2                    6                20B
┌─────────┐    ┌───────────┐    ┌───────────┐
│         │    │  SPEECH   │    │ HIGH-FRQ  │
│   MIC   │───▶│  INPUT    │───▶│COMPENSATOR│───┬──────
│         │    │ INTERFACE │    │(20 dB/DEC │   │
└─────────┘    └───────────┘    │ OR MORE)  │   │
                                └───────────┘   │
              15                      7         │
        ┌───────────┐    ┌───────────┐          │
        │   RMS     │    │  VOICE    │          │
        │ SMOOTHER  │───▶│ DETECTOR  │─────▶    │
        └───────────┘    └───────────┘          │
              8A              9                  │
        ┌───────────┐ ┌───────────┐             │
        │           │ │ PARAMETER │             │
        │ BANDPASS  │ │EXTRACTION │─────▶       │
        │  FILTERS  │─│ SECTION   │             │
        │           │ │           │             │
        └───────────┘ └───────────┘             │
              ▲                                 │
              └─────────────────────────────────┘
```

# FIG.4

NOISE LEVEL IN PASS'ER COMPARTMENT (dB)

200 c/s
80km/h
70km/h
400 c/s
800 c/s
60 km/h
IDLING

FREQUENCY (KHZ)

log

# FIG.5

NOISE LEVEL (dB)

−20~25dB/DECADE

FREQUENCY (KHZ)

log

3

0 100 773

*FIG.6*

*FIG.7*

*FIG.8*

4

## FIG.9

```
   2            6            20C          15            7
  ┌─────┐   ┌──────────┐  ┌─────────┐  ┌─────────┐  ┌──────────┐
  │     │   │ SPEECH   │  │ NOTCH   │  │ RMS     │  │ VOICE    │
  │ MIC ├──▶│ INPUT    ├─▶│ FILTERS ├─┬▶│ SMOOTHER├─▶│ DETECTOR ├──▶
  │     │   │ INTERFACE│  │         │ │ │         │  │          │
  └─────┘   └──────────┘  └─────────┘ │ └─────────┘  └──────────┘
                                      │        8            9
                                      │  ┌──────────┐  ┌────────────┐
                                      │  │ BANDPASS │  │ PARAMETER  │
                                      └─▶│ FILTERS  ├─▶│ EXTRACTION ├──▶
                                         │          │  │ SECTION    │
                                         └──────────┘  └────────────┘
```

## FIG.10

FREQUENCY (KHZ)

⟶ log

ATTENUATION RATE

0 100 773

# FIG.11

| 2 | 6 | 20B | I5 | 7 |
|---|---|---|---|---|
| MIC | SPEECH INPUT INTERFACE | HIGH FRQ COMPENSATOR | RMS SMOOTHER | VOICE DETECTOR |

8B
BANDPASS FILTERS

9
PARAMETER EXTRACTION SECTION

# FIG.12

FREQUENCY (KHZ)

→ log

ATTENUATION RATE

0   0.2   0.3   0.5   fH   1.0   2.0   3.0   5.0

fL

0.5 to 0.6

0.9 to 1.2

1.2 to 2.2

2.0 to 3.8

1st FILTER   2nd FILTER   3rd FILTER

# FIG.13